# EUROPEAN PATENT SPECIFICATION

(11) **EP 3 698 998 B1**
(45) Date of publication and mention of the grant of the patent: **10.03.2021**
(21) Application number: 19158814.4
(22) Date of filing: 22.02.2019
(51) Int. Cl.: B60G 11/04, B60K 1/00, B60K 7/00

(54) **REAR SUSPENSION UNIT FOR A VEHICLE, HAVING A RIGID AXLE AND AN ELECTRIC MOTOR UNIT MOUNTED ON THE AXLE**
HINTERE AUFHÄNGUNGSEINHEIT FÜR EIN FAHRZEUG MIT EINER STARREN ACHSE UND EINER AN DER ACHSE MONTIERTEN ELEKTROMOTOREINHEIT
UNITÉ DE SUSPENSION ARRIÈRE POUR UN VÉHICULE DOTÉ D'UN ESSIEU RIGIDE ET UNITÉ DE MOTEUR ÉLECTRIQUE MONTÉE SUR L'ESSIEU

(43) Date of publication of application: 26.08.2020
(73) Proprietor: FCA Italy S.p.A., 10135 Torino (IT)
(72) Inventor: PAVESIO, Carlo, I-10135 Torino (IT); MESSINA, Alessandro, I-10135 Torino (IT)
(74) Representative: Notaro, Giancarlo

(56) References cited:
- WO-A1-2019/023531
- DE-U1-202004 016 348
- FR-A1- 2 281 850
- FR-A1- 3 050 151
- US-A1- 2011 259 657

## Description

### Field of the invention

The present invention relates to a rear suspension unit of a vehicle, in particular for light duty vehicles, vans or the like, of the known type comprising a rigid axle having opposite end portions carrying respective wheel supports, and a pair of leaf springs for suspending the end portions of the rigid axle to the vehicle frame.

### Prior art

Rear suspension units with rigid axle of the above indicated type have been frequently adopted in light duty vehicles, vans and the like both because they are of simple and inexpensive construction and because in vehicles of this type they fully satisfy the performance characteristics which are required.

In the case of conventional light duty vehicles having a front internal combustion engine and rear traction, the rear axle has a hollow structure which includes the casing of the differential. Inside the rigid axle there are arranged the two shafts which connect the output of the differential to the rear wheels. In recent times, an increasing interest have been developing towards hybrid electric vehicles (HEV) also in the category of light duty vehicles, vans and the like. In vehicles of this type, it is desirable on one hand to preserve the use of a rear suspension with rigid axle and on the other hand to provide a rear electric motor unit, in place of the differential, for the traction of the rear wheels. However, the adoption of a rear electric motor unit, arranged substantially coaxially with the rear wheels, generates a problem in the case of a rear suspension with rigid axle, due to the interference of the structure of the electric motor unit with the structure of the rigid axle.

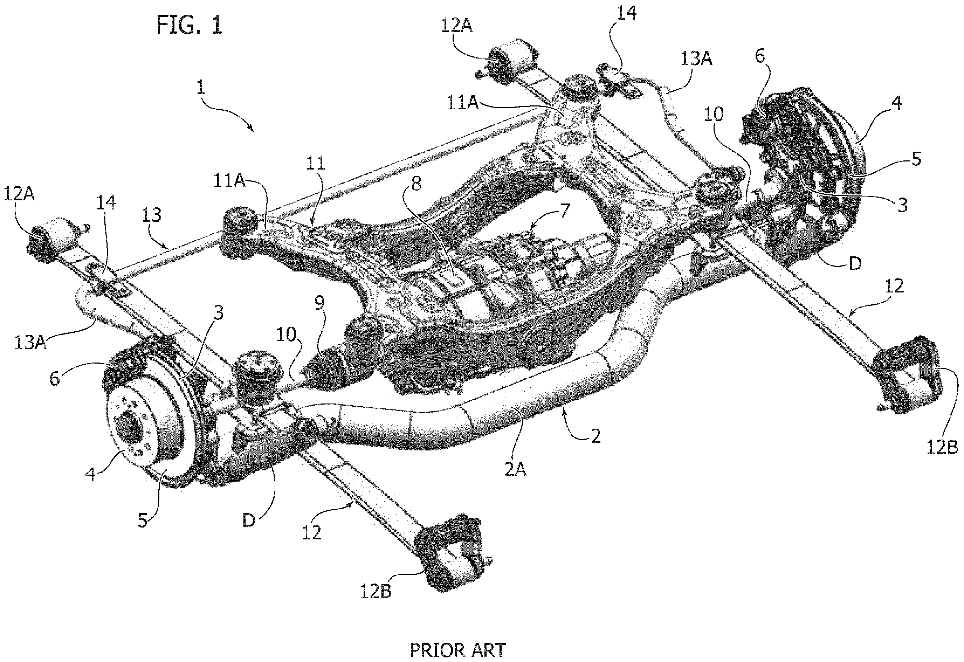

Figures 1-3 of the annexed drawings show an example of a solution which has been adopted for a rear suspension with a rigid axle of a vehicle which is commercially available, having a rear electric motor unit.

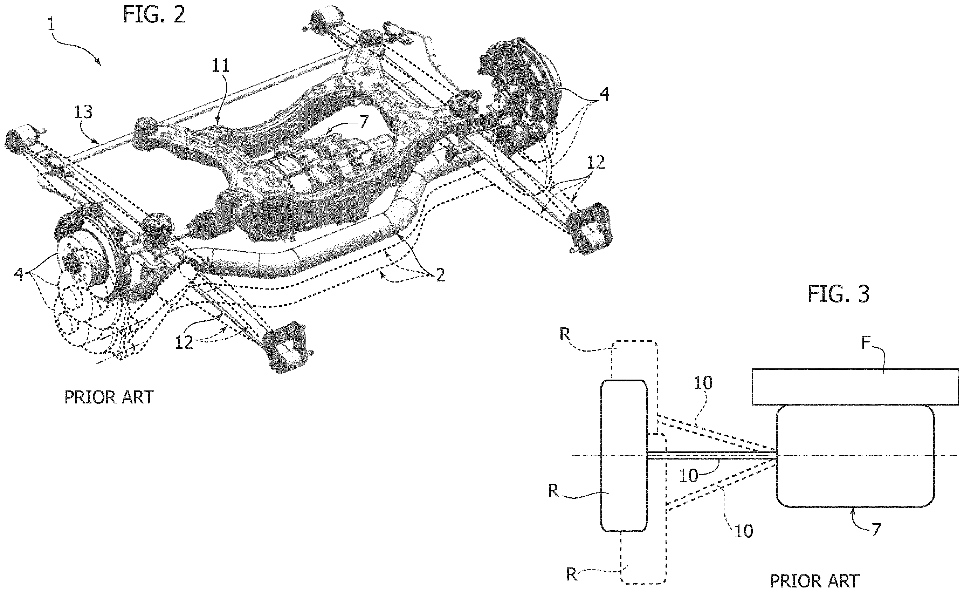

In figure 1, numeral 1 generally designates the vehicle rear suspension, which includes a rigid axle 2, which, in the case shown herein, is in the form of a tubular cross-member, having ends carrying wheel supports 3 for the rear wheels (diagrammatically shown only in figure 3). In figure 1 the hubs 4 of the rear wheels are shown, to which there are associated brake discs 5 cooperating with brake calipers 6 carried by the wheels supports 3. Also with reference to figure 1, numeral 7 generally designates an electric motor, whose supporting structure is designated by 8, having two outputs connected by means of homokinetic couplings 9 to two shafts 10 for traction of the wheels.

In the case of this known solution, the electric motor 7 is supported by the vehicle frame (not shown) with the interposition of an auxiliary frame 11. In the case shown herein, this auxiliary frame includes a hollow structure of sheet metal, with a quadrangular annular shape, having four peripheral arms 11A, each terminating with one end which is connected to the vehicle frame with the interposition of an elastic support.

Also with reference to figure 1, each end of the rigid axle 2 associated to a respective wheel support 3 is suspended to the vehicle frame by means of a leaf spring 12. More specifically, each leaf spring 12 includes one or more metal leaves which are rigidly clamped with each other at their central portion and which are connected to the respective end of the rigid axle 2. The opposite ends of the leaf spring 12 are connected to the vehicle frame. In particular one end of each leaf spring is connected to the frame with the interposition of an elastic bush 12A having a horizontal axis directed transversally with respect to the longitudinal direction of the vehicle, whereas the opposite end is connected to the frame by means of a connecting rod member 12B.

As clearly evident from the foregoing, in the known solution the supporting structure 8 of the electric motor 7 is connected to the vehicle frame, so that the electric motor is suspended together with the vehicle frame by means of the auxiliary frame 11. Furthermore, the rigid axle must be configured with the central portion 2A which is out-of-axis with respect to the end portions of the axle to avoid an interference with the electric motor 7 during the movements of the suspension.

Also with reference to figure 1, reference numeral 13 designates an anti-roll torsion bar, which is rotatably mounted around an axis transverse with respect to the longitudinal direction of the vehicle, through supports 14 which are to be secured to the vehicle frame. The torsion bar having longitudinal arms 13A at its ends which are connected to the two wheel supports.

Figure 2 of the annexed drawings shows, by way of example, various relative positions of the rigid axle 2 with respect to the vehicle frame, the auxiliary frame 11 and the electric motor 7.

Figure 3 of the annexed drawings diagrammatically shows the above mentioned known solution, where the electric motor 7 is rigidly connected to the vehicle frame F, so that during the movements of the suspension each rear wheel R moves vertically with respect to the electric motor 7. As a consequence of this, also each of the shafts 10 which connect the electric motor to the wheels assumes different inclinations during the movements of the suspension.

The above indicated known solution has the drawback to be of complicated construction, to imply the use of a high number of components (the provision is in particular required of an auxiliary frame 11 for mounting the electric motor 7 on the vehicle frame) with the consequence of a greater complexity of the assembling operations and of causing an excessive stress on the couplings 9 which connect the electric motor to the wheels.

### A rear suspension unit according to the preamble of claim 1 is known from FR 3 050 151 A1.

### Object of the invention

The object of the present invention is that of providing a rear suspension unit with a rigid axle, for a hybrid electric vehicle including a rear electric motor, which is of simple construction and efficient and reliable in operation.

### Summary of the invention

In view of achieving the above indicated object, the invention provides a rear suspension unit for a motor-vehicle, comprising the features of claim 1.

In one specific embodiment, which is provided herein purely by way of non-limiting example, the rear suspension unit according to the invention is characterized in that:
- said rigid axle includes two cross-member structures having central portions which are spaced apart from each other,
- at each end of the rigid axle, the two cross-member structures are rigidly connected to a common end structure carrying a respective wheel support,
- said electric motor is mounted on said cross-member structures, in the space defined between their central portions.

Also in the case of the preferred embodiment, each cross-member structure has a hollow body of sheet metal, having an upper wall, a lower wall, a front wall and a rear wall (with reference to the mounted condition on the vehicle) and the electric motor has a supporting structure provided with connection pins projecting forwardly and rearwardly from said supporting structure (again with reference to the mounted condition on the vehicle) and each received within the cavity of a respective cross-member structure with the interposition of an elastic bush.

Due to the above indicated features, the rear suspension unit according to the invention is able to provide a number of important advantages. First of all, the electric motor is not suspended, but rather it is connected to the rigid axle, so that it follows the movements of the suspension with respect to the vehicle frame, when the leaf springs are subjected to deformation. This condition on one hand ensures greater efficiency and reliability of the suspension and on the other hand simplifies the vehicle structure dramatically, since it is no longer necessary to provide an auxiliary frame for mounting the electric motor on the vehicle frame.

Another advantage lies in that the shafts connecting the electric motor to the vehicle wheels are not subjected to great variations of their operating inclination during the movements of the suspension, which increases the reliability and the duration of the suspension and makes also possible to simplify the structure (and hence to reduce the cost) of the whole unit formed by the vehicle suspension and the electric motor. Furthermore, the structure of the rigid axle may have a simpler and more balanced configuration, to advantages for the reduction in cost of manufacture and a better distribution of the stresses to which the rigid axle is subjected during travel of the vehicle.

### Detailed description of the invention

Further features and advantages of the invention will become apparent from the description which follows with reference to the annexed drawings, given purely by way of non-limiting example, in which:
- figures 1-3, described in the foregoing, show perspective views and one diagrammatic front partial view of a rear suspension unit for a hybrid electric vehicle according to a known solution,
- figure 4 is a perspective view of one preferred embodiment of a rear suspension unit for a hybrid electric vehicle, in particular a light duty vehicle or a van,
- figure 5 is substantially similar to figure 4 and shows different relative positions of the rigid axle with respect to the vehicle frame,
- figure 6 is a front partial diagrammatic view of the rear suspension unit according to the invention, which shows that during the movements of the suspension the electric motor and each wheel move together in the vertical direction with respect to the vehicle frame,
- figure 7 is an exploded perspective view of the unit of figure 4,
- figure 8 is a top view of the unit of figure 4,
- figure 9 is a partial view, partially in cross-section and at an enlarged scale, of the unit of figure 4, and
- figure 10 shows the detail designated by arrow X in figure 9 at an enlarged scale.

Figures 1-3 have been discussed in the initial part of the present description.

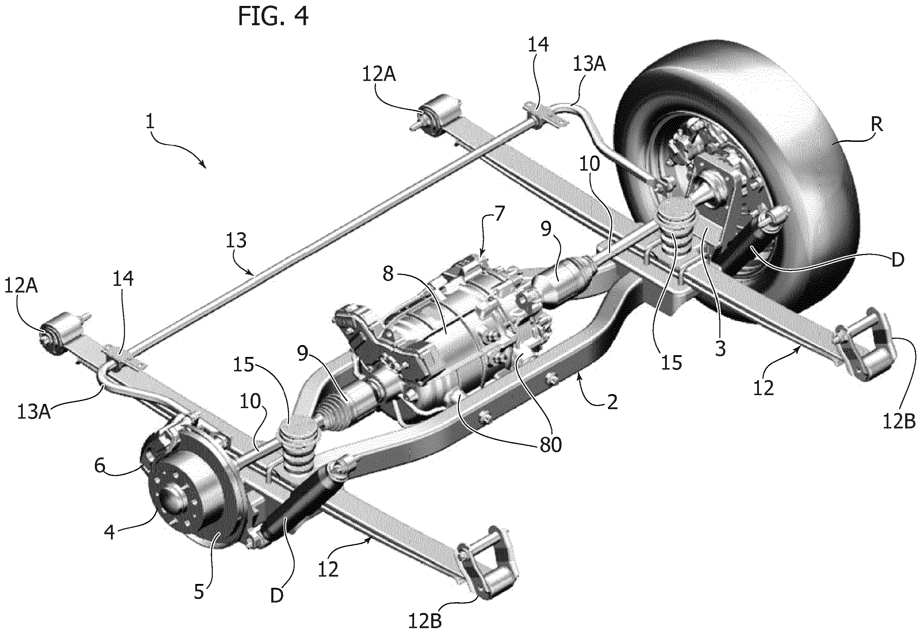

The rear suspension unit according to the invention is for use in a vehicle with a rigid axle rear suspension architecture, in particular in a light duty vehicle or a van, configured as a hybrid electric vehicle (HEV) and provided with a rear electric motor 7 for traction of the rear wheels (only one of which is shown in figure 4). Also in this case, the suspension unit includes a rigid axle 2, whose structure and configuration will be described in detail in the following; the ends of the rigid axle carry respective wheel supports 3 on which there are rotatably mounted the wheel hubs 4, to which there are associated brake discs 5 cooperating with brake calipers 6. Also in this case, the electric motor 7 is connected by means of homokinetic couplings 9 to two shafts 10 for traction of the wheels. Also similarly to the known solution shown in figures 1-3, the ends of the rigid axle 2 which carry the wheel supports 3 are suspended to the vehicle frame through two leaf springs 12, whose structure and configuration may be totally similar to what has been described with reference to figure 1. Finally, also in the case of the embodiment shown herein, an anti-roll torsion bar 13 is provided which is rotatably supported around a transverse axis through supports 14 secured to the vehicle frame, the torsion bar being provided with longitudinal arms 13A connected to the wheel supports.

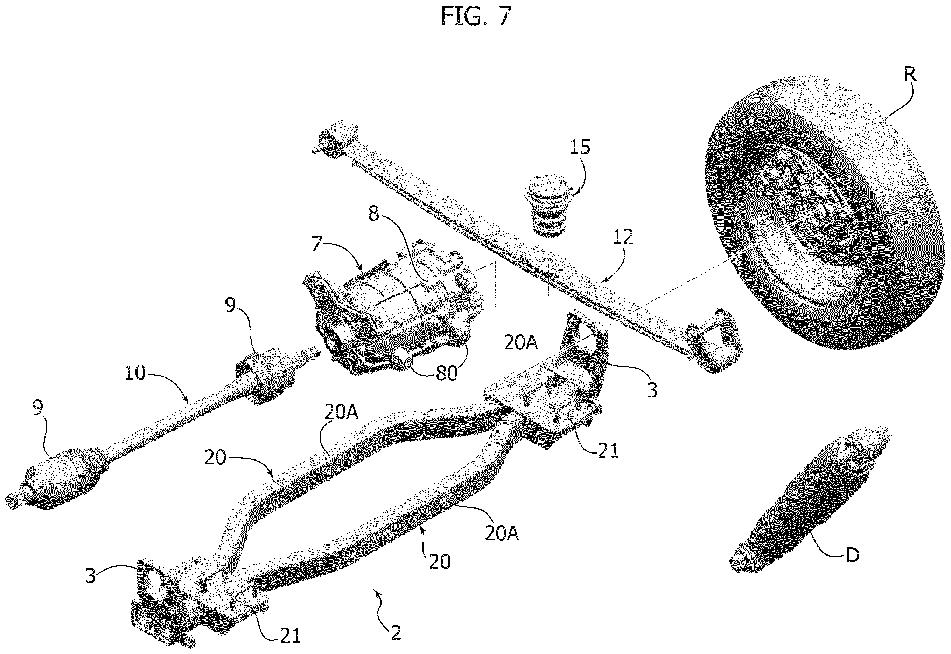

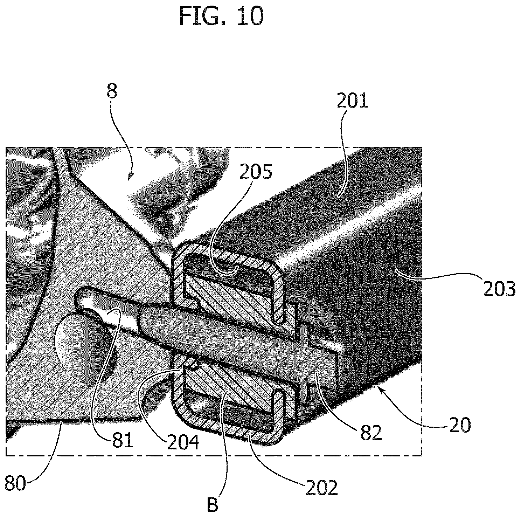

With reference in particular to figure 7, the rigid axle 2 of the embodiment shown herein comprises two cross-member structures having respective central portions 20A which are arranged parallel and spaced apart in a substantially horizontal plane (with reference to the mounted condition on the vehicle). At each end of the rigid axle 2, the two cross-member structures 20 merge towards a common end support 21 constituted of sheet metal, which is rigidly connected, for example by welding, to the two cross-member structures 20. On its turn, each end support 21 rigidly carries the respective wheel support 3. As also clearly shown in figures 4,7, each cross-member structure 20 is in the form of a hollow structure of sheet metal, with an upper wall, a lower wall, a front wall and a rear wall. These walls are better visible in the detail at an enlarged scale of figure 10, where a cross-member structure 20 is shown in cross-section. In this figure, numerals 201, 202, 203, 204 respectively designate the upper wall, the lower wall, the front wall and the rear wall of the cross-member structure 20. These walls define an inner cavity 205 therebetween.

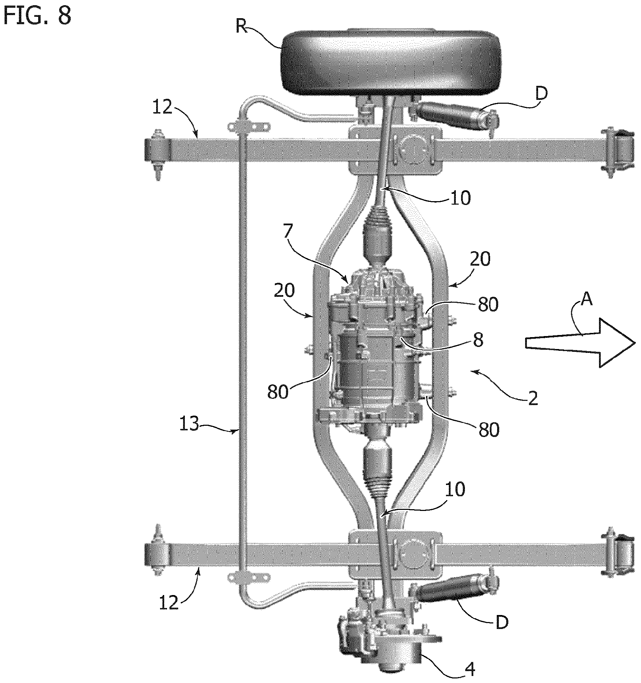

A further important feature of the present invention lies in that the electric motor 7 is rigidly connected to the rigid axle 2 rather than being connected to the vehicle frame through an auxiliary frame, as it was instead the case of the known solution of figure 1. Therefore, in the case of the invention, the electric motor does not form part of the suspended masses. As shown in figures 4 and 8, the electric motor 7 is arranged centrally with respect to the rigid axle 2, in the space between the two central portions 20A of the cross-member structures 20, in a position substantially coaxial with the rear wheels R. In the specific case which is illustrated herein, to the structure 8 of the electric motor 7 there are associated two front connection pins 80 and one rear connection pin 80 (again with reference to the direction of movement A of the vehicle, see figure 8). Also in the case of the specific example which is shown herein, the two front pins 80 are directed longitudinally and are arranged symmetrically on the two sides and at a distance with respect to the median longitudinal vertical plane of the vehicle, whereas the rear pin 80 is arranged in a central position. Naturally, this arrangement is described and shown herein purely by way of example, since it is clearly understood that any different arrangements could be adopted. Also in the case of the specific example illustrated herein (see in particular figure 10), each pin 80 is received into the cavity 205 of a respective cross-member structure 20, with the interposition of an elastic bush B (however the use of rigid bushes is not excluded). In one specific example, each pin 80 may be constituted by a screw having one threaded end which is screwed into a blind threaded hole 81 formed in the structure of the structure 8 and having one head 82 in contact with the outer surface of the front wall 203. Each screw 80 is inserted through coaxial holes formed in the front wall 203 and in the rear wall 204 of the cross-member structure 20.

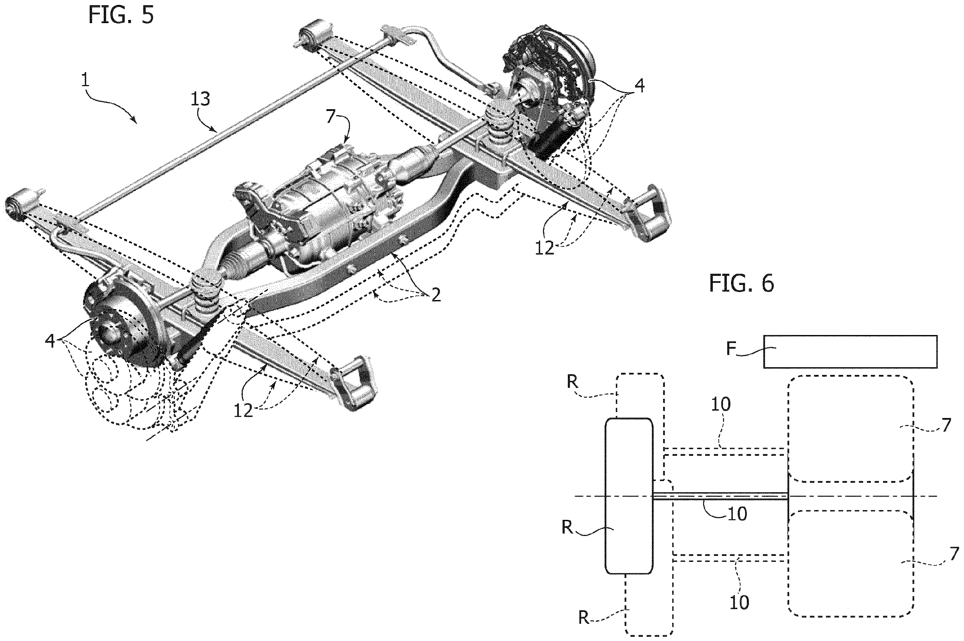

Due to the above-described arrangement, in the case of the rear suspension unit according to the invention the electric motor 7 moves vertically together with the rear wheels R (see figures 5,6) with respect to the vehicle frame F, so that each shaft 10 is not subjected to relevant oscillations during the movements of the suspension.

Again with reference to figure 4, between the central portion of each leaf spring 12 and the vehicle frame there is interposed an elastic support 15 which limits the upward vertical movement of each end of the rigid axle 2 with respect to the vehicle frame, to ensure that the structure of the electric motor 7 does not come in contact with the frame or the floor panel of the vehicle. Figure 4 also shows two damping cylinders D which are interposed between the ends of the rigid axle 2 and the vehicle frame.

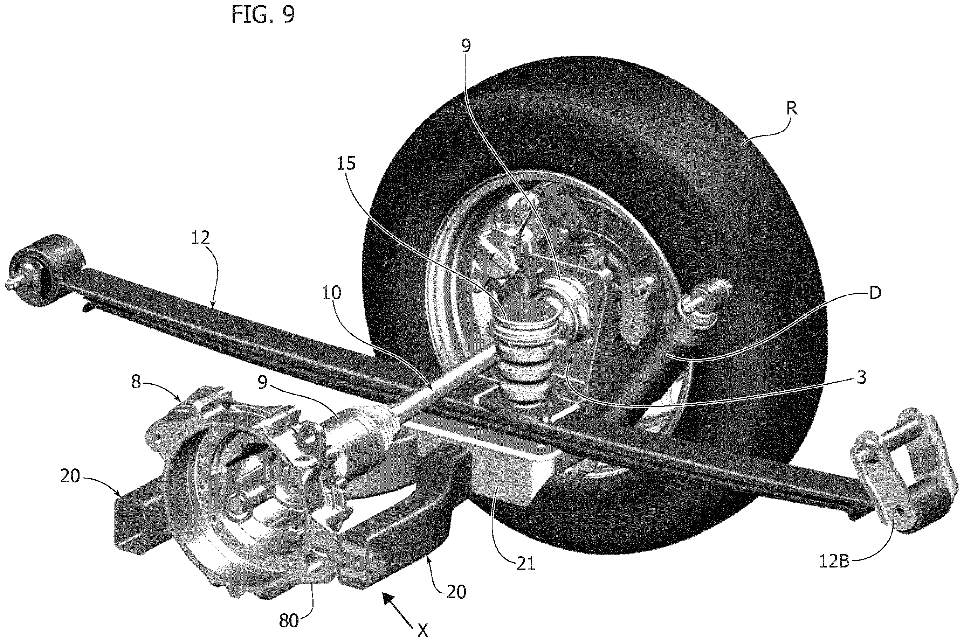

Figure 9 shows at an enlarged scale and partially in cross-section one end portion of the structure 8 of the electric motor 7 from which there projects the shaft of the electric motor, connected to a respective wheel R through a respective shaft 10 and the homokinetic couplings 9. Figure 9 also shows at an enlarged scale the detail of the connection between the ends of the two cross-member structures 20 to the respective end support 21 rigidly connected to the wheel support 3.

Naturally, while the principle of the invention remains the same, the details of construction and the embodiments may widely vary with respect to what has been described and illustrated purely by way of example, without departing from the scope of the present invention as defined in the annexed claims.

## Claims

1. Vehicle rear suspension unit, particularly for light duty vehicles, vans and the like, comprising:
- a rigid axle (2) having opposite end portions carrying respective wheel supports (3),
- a pair of leaf springs (12) for suspending the end portions of the rigid axle (2) to the vehicle frame (F), and
- an electric motor (7) arranged centrally with respect to the rigid axle (2), for traction of the wheels (R) which are carried by said wheel supports (3),
wherein:
- said electric motor (7) is mounted onto said rigid axle, so that it constitutes a non-suspended mass,
- said rigid axle (2) includes at least one cross-member structure (20),
- at each end of the rigid axle (2), said at least one cross-member structure (20) is rigidly connected to an end structure (21) carrying a respective wheel support (3),
said suspension unit being **characterized in that**:
- said electric motor (7) has two output shafts (10) projecting from opposite ends of the electric motor (7) and each connected to a respective wheel (R) through a respective homokinetic coupling (9), and
- said electric motor (7) is mounted on a central portion of said at least one cross-member structure (20) by means of elastic supports (B).

2. Rear suspension unit according to claim 1, **characterized in that**:
- said rigid axle (2) includes two cross-member structures (20) having central portions (20A) which are spaced apart from each other,
- at each end of the rigid axle (2) the two cross-member structures (20) are rigidly connected to a common end structure (21) carrying a respective wheel support (3),
- said electric motor (7) is mounted on said cross-member structures (20) within the space defined between their central portions (20A).

3. Rear suspension unit according to claim 1 or claim 2, **characterized in that** each cross-member structure (20) has a hollow body of sheet metal, having an upper wall (201), a lower wall (202), a front wall (203) and a rear wall (204), and **in that** the electric motor (7) has a supporting structure (8) provided with connection pins (80) projecting forwardly and rearwardly from said supporting structure (8), with reference to the mounted condition on the vehicle, each of said connection pins being received within the cavity of a respective cross-member structure (20), with the interposition of a rigid or elastic bush (B).

4. Rear suspension unit according to claim 1, **characterized in that** on the central portion of each leaf spring (12) there is arranged an elastic support (15) adapted to limit the upward displacement of the respective end of the rigid axle (2) with respect to the vehicle frame (F), in order to avoid an interference between the electric motor (7) and the vehicle frame (F).

## Patentansprüche

1. Hintere Aufhängungseinheit für ein Fahrzeug, insbesondere für Leichtlastfahrzeuge, Lieferwagen und dergleichen, mit:
- einer starren Achse (2) mit gegenüberliegenden Endbereichen, die entsprechende Radaufhängungen (3) tragen,
- zwei Blattfedern als Paar (12) zum Aufhängen der Endbereiche der starren Achse (2) an dem Fahrzeugrahmen (F), und
- einem Elektromotor (7), der zentral in Bezug auf die starre Achse (2) zum Antreiben der Räder (R), die von den Radaufhängungen (3) getragen werden, angeordnet ist,
wobei:
- der Elektromotor (7) auf der starren Achse derart montiert ist, dass er eine nichtgefederte Masse bildet,
- die starre Achse (2) mindestens einen Querträgeraufbau (20) aufweist,
- an jedem Ende der starren Achse (2) der mindestens eine Querträgeraufbau (20) starr mit einer Endstruktur (21), die eine entsprechende Radaufhängung (3) trägt, verbunden ist,
wobei die Aufhängungseinheit **dadurch gekennzeichnet ist, dass**:
- der Elektromotor (7) zwei Ausgangswellen (10) hat, die aus gegenüberliegenden Enden des Elektromotors (7) hervorstehen und jeweils mit einem entsprechenden Rad (R) über eine entsprechende Gleichlaufkupplung (9) verbunden sind, und
- der Elektromotor (7) auf einem zentralen Bereich des mindestens einen Querträgeraufbaus (20) durch elastische Halterungen (B) montiert ist.

2. Hintere Aufhängungseinheit nach Anspruch 1, **dadurch gekennzeichnet, dass**:
- die starre Achse (2) zwei Querträgeraufbauten (20) mit zentralen Bereichen (20A), die voneinander beabstandet sind, aufweist,
- an jedem Ende der starren Achse (2) die zwei Querträgeraufbauten (20) starr mit einer gemeinsamen Endstruktur (21), die eine entsprechende Radaufhängung (2) trägt, verbunden sind,
- der Elektromotor (7) auf den Querträgeraufbauten (20) in einem Raumbereich montiert ist, der zwischen ihren zentralen Bereichen (20A) gebildet ist.

3. Hintere Aufhängungseinheit nach Anspruch 1 oder Anspruch 2, **dadurch gekennzeichnet, dass** jeder Querträgeraufbau (20) einen Hohlkörper aus Metallblech aufweist mit einer oberen Wand (201), einer unteren Wand (202), einer vorderen Wand (203) und einer hinteren Wand (204), und dass der Elektromotor (7) eine Haltestruktur (8) hat, die mit Verbindungsstiften (80) versehen ist, die aus der Haltestruktur (8) nach vorne und nach hinten hervorstehen, wobei bezogen auf den montierten Zustand in dem Fahrzeug jeder der Verbindungsstifte in dem Hohlraum eines entsprechenden Querträgeraufbaus (20) aufgenommen ist, wobei eine starre oder elastische Hülse (B) dazwischen angeordnet ist.

4. Hintere Aufhängungseinheit nach Anspruch 1, **dadurch gekennzeichnet, dass** auf dem zentralen Bereich jeder Blattfeder (12) eine elastische Halterung (15) angeordnet ist, die ausgebildet ist, die Aufwärtsauslenkung des entsprechenden Endes der starren Achse (2) in Bezug auf den Fahrzeugrahmen (F) zu begrenzen, um eine Behinderung zwischen dem Elektromotor (7) und dem Fahrzeugrahmen (F) zu vermeiden.

## Revendications

1. Unité de suspension arrière de véhicule, en particulier pour des véhicules utilitaires légers, fourgonnettes et analogues, comprenant :
- un essieu rigide (2) ayant des parties d'extrémité opposées portant des supports de roues respectifs (3),
- une paire de ressorts à lames (12) pour suspendre les parties d'extrémité de l'essieu rigide (2) au châssis du véhicule (F), et
- un moteur électrique (7) agencé de façon centrale par rapport à l'essieu rigide (2), pour la traction des roues (R) qui sont portées par lesdits supports de roues (3),
dans laquelle :
- ledit moteur électrique (7) est monté sur ledit essieu rigide, de sorte qu'il constitue une masse non suspendue,
- ledit essieu rigide (2) comporte au moins une structure de traverse (20),
- à chaque extrémité de l'essieu rigide (2), ladite au moins une structure de traverse (20) est reliée rigidement à une structure d'extrémité (21) portant un support de roue respectif (3),
ladite unité de suspension étant **caractérisée en ce que** :
- ledit moteur électrique (7) a deux arbres de sortie (10) faisant saillie à partir d'extrémités opposées du moteur électrique (7) et reliés chacun à une roue respective (R) par un accouplement homocinétique respectif (9), et
- ledit moteur électrique (7) est monté sur une partie centrale de ladite au moins une structure de traverse (20) au moyen de supports élastiques (B).

2. Unité de suspension arrière selon la revendication 1, **caractérisée en ce que** :
- ledit essieu rigide (2) comporte deux structures de transverse (20) ayant des parties centrales (20A) qui sont espacées l'une de l'autre,
- à chaque extrémité de l'essieu rigide (2) les deux structures de transverse (20) sont reliées rigidement à une structure d'extrémité commune (21) portant un support de roue respectif (3),
- ledit moteur électrique (7) est monté sur lesdites structures de transverse (20) dans l'espace défini entre leurs parties centrales (20A).

3. Unité de suspension arrière selon la revendication 1 ou 2, **caractérisée en ce que** chaque structure de traverse (20) a un corps creux en tôle, ayant une paroi supérieure (201), une paroi inférieure (202), une paroi avant (203) et une paroi arrière (204), et **en ce que** le moteur électrique (7) a une structure de support (8) munie de broches de liaison (80) faisant saillie vers l'avant et vers l'arrière à partir de ladite structure de support (8), en référence à l'état monté sur le véhicule, chacune desdites broches de liaison étant reçue dans la cavité d'une structure de traverse respective (20), avec interposition d'une douille rigide ou élastique (B).

4. Unité de suspension arrière selon la revendication 1, **caractérisée en ce que** sur la partie centrale de chaque ressort à lames (12) est agencé un support élastique (15) apte à limiter le déplacement vers le haut de l'extrémité respective de l'essieu rigide (2) par rapport au châssis du véhicule (F), afin d'éviter une interférence entre le moteur électrique (7) et le châssis du véhicule (F).
